(19) Europäisches Patentamt / European Patent Office / Office européen des brevets

(11) **EP 2 941 081 B1**

(12) **EUROPEAN PATENT SPECIFICATION**

(45) Date of publication and mention
of the grant of the patent:
**31.05.2017 Bulletin 2017/22**

(51) Int Cl.:
***H04W 74/08*** *(2009.01)*

(21) Application number: **13869390.8**

(22) Date of filing: **29.08.2013**

(86) International application number:
**PCT/CN2013/082587**

(87) International publication number:
**WO 2014/101454 (03.07.2014 Gazette 2014/27)**

(54) **METHOD AND DEVICE FOR PROCESSING RANDOM ACCESS PREAMBLE**

VERFAHREN UND VORRICHTUNG ZUR VERARBEITUNG EINER DIREKTZUGRIFFSPRÄAMBEL

PROCÉDÉ ET DISPOSITIF DE TRAITEMENT D'UN PRÉAMBULE À ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 CN 201210587312**

(43) Date of publication of application:
**04.11.2015 Bulletin 2015/45**

(73) Proprietor: **ZTE Corporation**
**Shenzhen, Guangdong 518057 (CN)**

(72) Inventors:
• **GUO, Qi**
**Shenzhen**
**Guangdong 518057 (CN)**

• **LI, Bin**
**Shenzhen**
**Guangdong 518057 (CN)**
• **DING, Meiling**
**Shenzhen**
**Guangdong 518057 (CN)**

(74) Representative: **Carangelo, Pierluigi et al**
**Jacobacci & Partners S.p.A.**
**Via Tomacelli 146**
**00186 Roma (IT)**

(56) References cited:
**EP-A1- 2 234 298      WO-A1-2008/082273**
**CN-A- 101 637 040     CN-A- 101 940 053**
**CN-A- 101 940 053     CN-A- 102 811 191**
**US-A1- 2011 292 816**

**Description**

**TECHNICAL FIELD**

The present invention relates to the field of communications, and in particular to a method and device for processing a random access preamble.

**BACKGROUND**

Time Division-Long Term Evolution (TD-LTE) is one of the 4th Generation (4G) mobile communication technologies and standards, and has its technological advantages reflected in multiple aspects of speed, time delay, spectral efficiency, etc., which makes it capable of providing stronger services based on limited spectral bandwidth resources.
TD-LTE service and application also expand to more and more fields. For example, in a special scenario such as shipping line or sea surface, it is generally required that the coverage radius of a single-station cell shall be large enough to reduce the requirements of the station resource deployment and release the pressure of difficulty in finding a place to deploy a station. Hence, in a scenario of shipping line coverage, it is required that the single-station under directional antenna configuration shall provide a cell coverage radius of more than 100 kilometres, even 200 kilometres.
TD-LTE is a time division duplex system. In a TD-LTE system, a 10 ms radio frame includes regular subframes and special subframes. The downlink-to-uplink time slot ratio supported by a TD-LTE frame is shown in Table 1.

Table 1 Downlink-to-uplink time slot ratio of a TD-LTE system

| Downlink-to-Up link Subframe Ratio Configuration | Downlink-uplink switch-point periodicity | Subframe Number | | | | | | | | | |
|---|---|---|---|---|---|---|---|---|---|---|---|
| | | 0 | 1 | 2 | 3 | 4 | 5 | 6 | 7 | 8 | 9 |
| DL/UL = 1/3 | 5 ms | D | S | U | U | U | D | S | U | U | U |
| DL/UL = 2/2 | 5 ms | D | S | U | U | D | D | S | U | U | D |
| DL/UL = 3/1 | 5 ms | D | S | U | D | D | D | S | U | D | D |
| DL/UL = 6/3 | 10 ms | D | S | U | U | U | D | D | D | D | D |
| DL/UL = 7/2 | 10 ms | D | S | U | U | D | D | D | D | D | D |
| DL/UL = 8/1 | 10 ms | D | S | U | D | D | D | D | D | D | D |
| DL/UL = 3/5 | 5 ms | D | S | U | U | U | D | S | U | U | D |

A special subframe is constituted by three special time slots: Downlink Pilot Time Slot (DwPTS), Guard Period (GP) and Uplink Pilot Time Slot (UpPTS). The GP reserves a round trip transmission delay for the uplink/downlink data, and is one of the key factors for determining the cell radius. The time slot structure of the TD-LTE special subframe is shown in Table 2.

Table2 Time slot structure of a special subframe of a TD-LTE system

| Configuration of Special Subframe | Normal Cyclic Prefix | | | Extended Cyclic Prefix | | |
|---|---|---|---|---|---|---|
| | DwPTS | GP | UpPTS | DwPTS | GP | UpPTS |
| 0 | 3 | 10 | 1 OFDM Symbols | 3 | 8 | 1 OFDM Symbols |
| 1 | 9 | 4 | | 8 | 3 | |
| 2 | 10 | 3 | | 9 | 2 | |
| 3 | 11 | 2 | | 10 | 1 | |
| 4 | 12 | 1 | | 3 | 7 | 2 OFDM Symbols |
| 5 | 3 | 9 | 2 OFDM Symbols | 8 | 2 | |
| 6 | 9 | 3 | | 9 | 1 | |
| 7 | 10 | 2 | | - | - | - |
| 8 | 11 | 1 | | | - | - |

According to lengths of GP in different configurations, the radius of each cell in 20 MHz bandwidth can be calculated. Corresponding radius of the cell in 20 MHz bandwidth are shown in Table 3, where Ts is time unit, and 30720 Ts=1 ms.

Table3 Cell radius corresponding to each special subframe in 20 MHz bandwidth of a TD-LTE system

| Configuration of Special Subframe | Normal Cyclic Prefix | | Extended Cyclic Prefix | |
|---|---|---|---|---|
| | GP ($T_s$) | Cell Radius (km) | GP ($T_s$) | Cell Radius (km) |
| 0 | $21936T_S$ | 107.1094 | $20480T_S$ | 100 |
| 1 | $8768T_S$ | 42.8125 | $768T_S$ | 37.5 |
| 2 | $6576T_S$ | 32.10938 | $5120T_S$ | 25 |
| 3 | $4384T_S$ | 21.40625 | $2560T_S$ | 12.5 |
| 4 | $2192T_S$ | 10.70313 | $17920T_S$ | 87.5 |
| 5 | $19744\ T_S$ | 96.40625 | $5120\ T_S$ | 25 |
| 6 | $6576T_S$ | 32.10938 | $2560\ T_S$ | 12.5 |
| 7 | $4384T_S$ | 21.40625 | | |
| 8 | $2192T_S$ | 10.70313 | | |

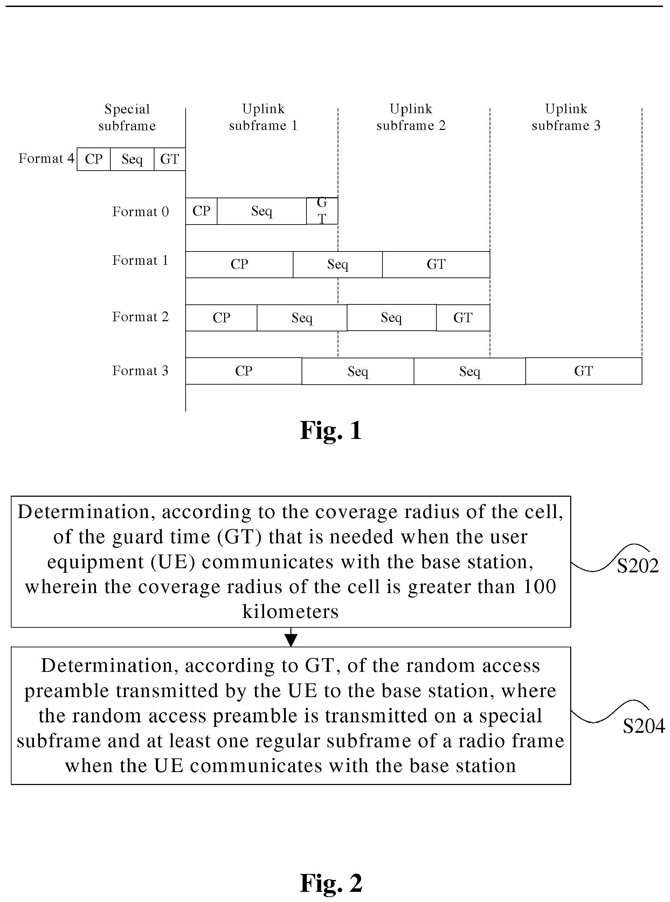

In addition, the cell radius is also decided by the structure of random access preamble (i.e., Preamble) of the TD-LTE system. A Preamble includes Cyclic Prefix (CP) with a length of $T_{CP}$, a random access preamble sequence (i.e., Sequence (Seq)) with a length of $T_{SEQ}$, and a Guard Time (GT). FIG. 1 shows a schematic structural diagram of a random access preamble of a TD-LTE system according to the related art. As shown in FIG. 1, five Preamble structures of the TD-LTE system is defined in the protocol, with the maximum cell radius supported by each Preamble shown in Table 4.

Table4 The maximum cell radii supported by five different Preambles in a TD-LTE system

| Configuration of Random Access Preamble | $T_{CP}$ | $T_{SEQ}$ | $T_{GT}$ | Cell Radius |
|---|---|---|---|---|
| Format 0 | $3168T_S$ | $24576T_S$ | $2976T_S$ | 14.5 km |
| Format 1 | $21024T_S$ | $24576T_S$ | $15840T_S$ | 77 km |
| Format 2 | $6240T_S$ | $2*24576T_S$ | $6048T_S$ | 30 km |
| Format 3 | $21024T_S$ | $2*24576T_S$ | $21984T_S$ | 100 km |
| Format 4* | $448T_S$ | $4096T_S$ | $614T_S$ | 3 km |

Hence, in a TD-LTE system in the related art, the maximum achievable coverage radius of a cell is 100 kilometres. To achieve a larger coverage radius of a single-station cell, the TD-LTE system needs to subject to corresponding configuration and design modification.

Therefore, there is a problem in the related art that the coverage radius of a single-station cell cannot be greater than 100 kilometres. US 2011/292816 A1, and CN 101940053 A provide respective technical solutions; however, the above mentioned problem is not very well solved.

**SUMMARY**

The embodiments of the present invention provide a method and device for processing a random access preamble, to at least solve the problem that the maximum coverage range of a single-station cell cannot satisfy a need in a special scenario. The invention is defined in the independent claims 1 and 6.

In the described embodiment, before determining, according to the GT, the random access preamble transmitted by the UE to the base station, the method further includes: determining, according to the coverage radius of the cell, a guard period (GP) that is needed when the UE communicates with the base station.

In the described embodiment, determining, according to the GT, the random access preamble transmitted by the UE to the base station includes: extending the length of the GT part in the random access preamble of the radio frame, wherein the length of the extended GT part is equal to the length of the GT determined according to the coverage radius of the cell.

In the described embodiment, after determining, according to the GT, the random access preamble transmitted by the UE to the base station, the method further includes: judging, in communication resources used by the UE to communicate with the base station, whether there are sufficient time slot resources for transmitting the random access preamble by the UE to the base station; and if the judging result is negative, adjusting the allocation of uplink/downlink time slot resources of the communication resources.

In the described embodiment, the GP has a length in a range from a length of 2/3 of a subframe to a length of 2 subframes.

According to another embodiment of the present invention, provided is a device for processing a random access preamble, including: a first determination component configured to determine, according to a coverage radius of a cell, a guard time (GT) that is needed when a user equipment (UE) communicates with a base station, wherein the coverage radius of the cell is greater than 100 kilometres; and a second determination component configured to determine, according to the GT, a random access preamble transmitted by the UE to the base station, wherein the random access preamble is transmitted on a special subframe and at least one regular subframe of a radio frame when the UE communicates with the base station.

In the described embodiment, the device further includes: a third determination component configured to determine, according to the coverage radius of the cell, a guard period (GP) that is needed when the UE communicates with the base station.

In the described embodiment, the second determination component includes: an extension unit configured to extend the length of the GT part in the random access preamble of the radio frame, wherein the length of the extended GT part is equal to the length of the GT determined according to the coverage radius of the cell.

In the described embodiment, the device further includes: a judgment component configured to judge, in communication resources used by the UE to communicate with the base station, whether there is a sufficient uplink time slot resource for transmitting the random access preamble by the UE to the base station; and an adjustment component configured to adjust, if the judging result of the judgment component is negative, the allocation of uplink/downlink time slot resources of the communication resources.

In the described embodiment, the third determination component is further configured to determine the length of the GP in a range from a length of 2/3 of a subframe to a length of 2 subframes.

By the embodiments of the present invention, a guard time (GT) that is needed when a user equipment (UE) communicates with a base station is determined according to the coverage radius of a cell, wherein the coverage radius of the cell is greater than 100 kilometres; and, the random access preamble transmitted by the UE to the base station is determined according to the GT, wherein the random access preamble is transmitted on a special subframe and at least one regular subframe of a radio frame when the UE communicates with the base station. This technical solution solves the problem that the maximum coverage range of a single-station cell cannot satisfy a need in a special scenario, further increases the coverage radius of the single-station cell, and satisfies the need in the special scenario for an extra-large radius in cell coverage range.

## DESCRIPTION OF THE DRAWINGS

Drawings, provided for further understanding of the present invention and forming a part of the specification, are used to explain the present invention together with embodiments of the present invention rather than to limit the present invention. In the drawings:

FIG. 1 shows a schematic structural diagram of a random access preamble of a TD-LTE system according to related art;
FIG. 2 shows a flowchart of a method for processing a random access preamble according to an embodiment of the present invention;
FIG. 3 shows a structure diagram of a device for processing a random access preamble according to an embodiment of the present invention;
FIG. 4 shows an example structure diagram I of a device for processing a random access preamble according to an embodiment of the present invention;
FIG. 5 shows an example structure diagram of a first determination component 32 in a device for processing a random access preamble according to an embodiment of the present invention;
FIG. 6 shows an example structure diagram II of a device for processing a random access preamble according to an embodiment of the present invention;
FIG. 7 shows a schematic structural diagram of a frame configuration device for an extra-large radius cell according to an embodiment of the present invention;

FIG. 8 shows a flowchart of implementation of a frame configuration method for an extra-large radius cell according to an embodiment of the present invention;

FIG. 9 shows a schematic diagram of a random access preamble with a radius of 200 km in a TD-LTE system according to an embodiment of the present invention; and

FIG. 10 shows a sequence chart of the frame structure of a cell with a radius of 200 km in a TD-LTE system according to an embodiment of the present invention.

## SPECIFIC EMBODIMENTS

It should be noted that the embodiments and the characteristics of the embodiments can be combined with each other if no conflict is caused. The present invention will be explained below with reference to the drawings and in conjunction with the embodiments in detail.

An embodiment of the present invention provides a method for processing a random access preamble. FIG. 2 shows a flowchart of a method for processing a random access preamble according to an embodiment of the present invention. As shown in FIG. 2, the method includes the following steps.

In step S202, a guard time (GT) that is needed when the user equipment (UE) communicates with the base station is determined according to a coverage radius of the cell, wherein the coverage radius of the cell is greater than 100 kilometres.

In step S204, a random access preamble transmitted by the UE to the base station is determined according to the GT, wherein the random access preamble is transmitted on a special subframe and at least one regular subframe of the radio frame when the UE communicates with the base station.

By the above-mentioned steps, a guard time (GT) that is needed when a user equipment (UE) communicates with a base station is determined according to the coverage radius of a cell, wherein the coverage radius of the cell being greater than 100 kilometres; and a random access preamble transmitted by the UE to the base station is determined according to the GT, wherein the random access preamble is transmitted on a special subframe and at least one regular subframe of a radio frame when the UE communicates with the base station. The length of the GT is extended according to the needed coverage radius of the cell (meanwhile, the length of the corresponding random access preamble is also extended). The random access preamble where the extended GT is located is transmitted in an uplink pilot time slot of the special subframe and an uplink subframe of the regular subframe. In this way, the problem that the maximum coverage range of a single-station cell cannot satisfy a need in a special scenario (i.e., the coverage radius of a single-station cell cannot be greater than 100 kilometres) can be solved to further increase the coverage radius of the single-station cell and satisfy the need in the special scenario for an extra-large radius in cell coverage range.

In the described embodiment, before determining, according to the GT, the random access preamble transmitted by the UE to the base station, the method also includes: determining, according to the coverage radius of the cell, a GP that is needed when the UE communicates with the base station. In the described embodiment, the length of the GP is in a range from a length of 2/3 of a subframe to a length of 2 subframes. Since the GP is in a special subframe, given that the length of the GP changes, the length of the special subframe shall be changed accordingly. By the method, the GP in the special subframe is extended according to the needed coverage radius of the cell, which can effectively prevent interference between the uplink data and the downlink data while satisfying the need in the special scenario for an extra-large radius in cell coverage range.

The step of determining, according to the GT, a random access preamble transmitted by the UE to the base station includes: extending the length of the GT part in the random access preamble of the radio frame, wherein the length of the extended GT part is equal to the length of the GT that is determined according to the coverage radius of the cell. For example, after extending the length of GT in the radio frame, accordingly, the length of the random access preamble may be greater than the length of three subframes. In such a case, a former part of the random access preamble, which has the same size as the extended part of GT of the random access preamble and is transmitted first, is adjusted to be transmitted in the uplink pilot time slot of the special subframe, while the other part is still transmitted in three consecutive uplink subframes of the regular subframe. That is, the entire random access preamble is transmitted in an uplink pilot time slot of a special subframe and three consecutive uplink subframes (located in regular subframes) following the special subframe. The method solves the problem of transmitting sequence when a random access preamble exceeds the length specified in the protocol, and improves the existing time slot utilization to a certain degree.

For ensuring the transmission of a random access preamble, after determining, according to the GT, the random access preamble transmitted by the UE to the base station, the method also includes: judging, in the communication resources used for the UE to communicate with the base station, whether there is sufficient uplink time slot resources for transmitting the random access preamble by the UE to the base station; and if the judging result is negative, adjusting the allocation of uplink/downlink time slot resources of the communication resources. That is, when the existing uplink time slot resources are not sufficient for transmitting the random access preamble with the extended GT, the downlink time slot resources are adjusted to be uplink time slot resources for transmitting the random access preamble.

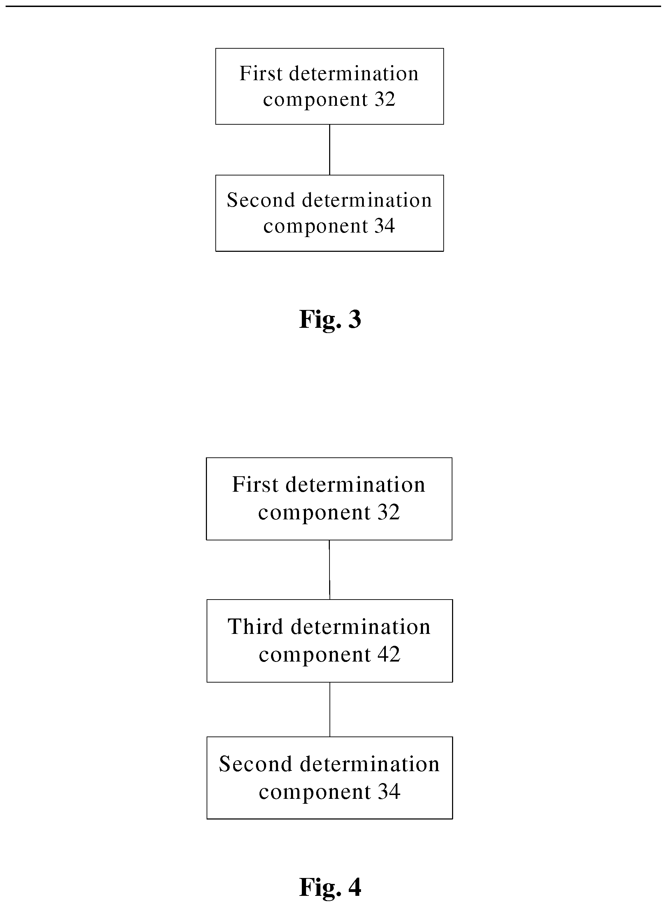

This embodiment also provides a device for processing a random access preamble device. FIG. 3 shows a structure diagram of a device for processing a random access preamble according to an embodiment of the present invention. As shown in FIG. 3, the device includes: a first determination component 32 and a second determination component 34. The device is described in detail below.

The first determination component 32 is configured to determine, according to the coverage radius of a cell, a guard time (GT) that is needed when a user equipment (UE) communicates with a base station, the coverage radius of the cell being greater than 100 kilometres; and a second determination component 34 coupled to the above-mentioned first determination component 32 and configured to determine, according to the GT, the random access preamble transmitted by the UE to the base station, wherein the random access preamble is transmitted on a special subframe and at least one regular subframe of a radio frame when the UE communicates with the base station.

FIG. 4 shows an example structure diagram I of a device for processing a random access preamble according to an embodiment of the present invention. As shown in FIG. 4, besides all components in FIG. 3, the example structure also includes a third determination component 42 coupled to the above-mentioned first determination component 32 and second determination component 34, and configured to determine, according to the coverage radius of the cell, the guard period (GP) when the UE communicates with the base station.

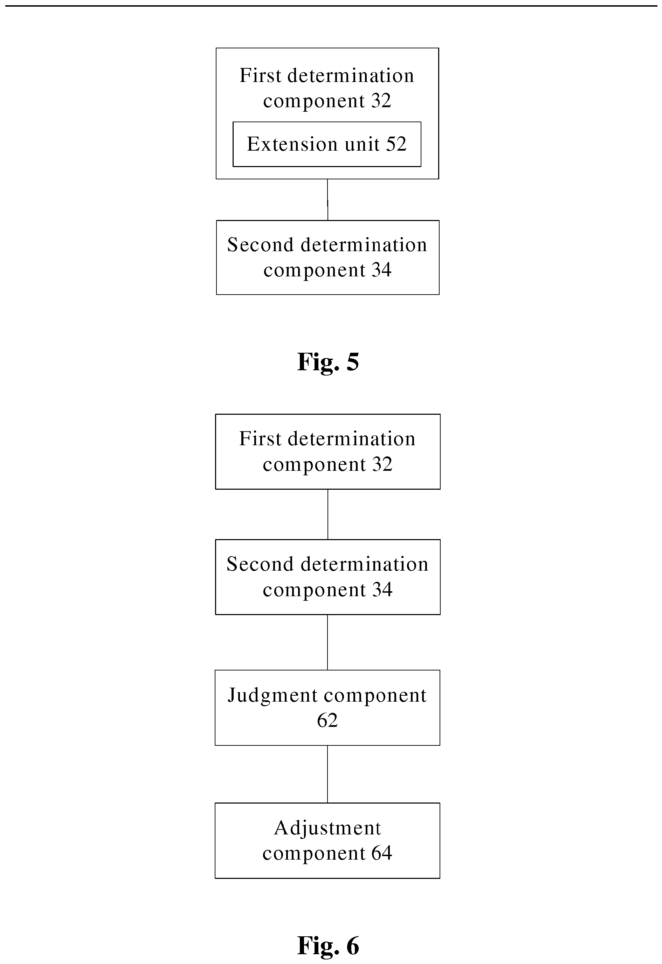

FIG. 5 shows an example structure diagram of a second determination component 34 in a device processing a random access preamble according to an embodiment of the present invention. As shown in FIG. 5, the second determination component 34 includes an extension unit 52 configured to extend the length of the GT part in the random access preamble of the radio frame, where the length of the extended GT part is equal to the length of the GT that is determined according to the coverage radius of the cell.

FIG. 6 shows an example structure diagram II of a device for processing a random access preamble according to an embodiment of the present invention. As shown in FIG. 6, besides all components in FIG. 3, the example structure also includes a judgment component 62 and an adjustment component 64. The example structure is described below.

The judgment component 62 is coupled to the above-mentioned second determination component 34 and configured to judge, in the communication resources used for the UE to communicate with the base station, whether there is sufficient uplink time slot resources for transmitting the random access preamble by the UE to the base station; and an adjustment component 64 coupled to the above-mentioned judgment component 62 and configured to adjust, if the judging result is negative, the allocation of uplink/downlink time slot resources of the communication resources.

In the described embodiment, the above-mentioned third determination component 42 is also configured to determine the length of the guard period (GP) in a range from a length of 2/3 of a subframe to a length of 2 subframes.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions. The description in the device embodiments corresponds to the above-mentioned method embodiments, and the specific implementation of the apparatus embodiments has been described in detail in the method embodiments, which will not be described here further.

To make the technical solution and implementation methods of the present invention clearer, the implementation process will be described below in detail combined with example embodiments.

A base station communicates with a user equipment through a radio frame, where the length of a random access preamble of the radio frame is greater than the length of three subframes, the random access preamble includes a guard time (GT) with an extended length, and one special subframe of the radio frame includes a guard period (GP) with an extended length. In the described embodiment, the length of the GT is greater than the length of 3/4 of a subframe, and the length of the GP is greater than the length of 2/3 of a subframe.

In the described embodiment, the above-mentioned random access preamble includes: one cyclic prefix, two random access preamble sequences, and one GT, where, in a 20 MHz bandwidth, the cyclic prefix has a length of 21024 Ts, the random access preamble sequence has a length of 24576 Ts, and the GT has a length greater than 23040 Ts, the length of one subframe is 30720 Ts, Ts is the time unit, and 30720 Ts=1 ms. The above-mentioned special subframe includes: a GP and an uplink pilot time slot (UpPTS), where the GP has a length greater than 20480 Ts.

In the described embodiment, the random access preamble of the radio frame is transmitted in the uplink pilot time slot (UpPTS) of the special subframe and three consecutive uplink subframes.

The method and device of frame configuration for an extra-large radius cell provided by the above-mentioned embodiments and example embodiments can ensure the coverage radius of a single-station cell of a TD-LTE base station to extend from 100 kilometres specified in protocols to 200 kilometres or even larger. The solution is specifically described as follows.

In this example embodiment, configuring and modifying, according to the coverage radius of the target cell, the frame structure of the TD-LTE system, includes the following steps:

a guard period extension step for calculating, according to the coverage radius of the target cell, the needed guard period (GP) and extending the TD-LTE guard period as required to 1-2 subframes, so as to ensure that the uplink data of the large cell system will not interfere the downlink data;

a cell random access preamble (Preamble) configuration step for extending, according to the coverage radius of the target cell, the guard time (GT) that is needed by the random access preamble, and modifying the format of the preamble sequence, so as to ensure that the preamble random access preamble needed by the large cell system will not interfere the downlink data; and

a radio frame structure modification step for modifying the structure of the radio frame in combination with the configuration of special subframe and the requirements of random access preamble, so as to satisfy the requirements of round trip transmission of large-radius cell edge users and avoid the uplink and downlink data interference in the system.

The configurations of the above-mentioned three aspects are described below.

The guard period extension step specifically includes: calculating, according to the requirements of the coverage radius of the target cell, the needed guard period, and extending the TD-LTE guard period to 1-2 subframes as required. For the large cell the coverage radius of which needs to be extended to 200 kilometres, the time slots of the special subframe where the guard period (GP) is located need to be extended to 2 subframes.

The cell random access preamble (Preamble) configuration step specifically includes: calculating, according to the requirements of the coverage radius of the target cell, the needed guard time (GT) of the random access preamble, and extending the TD-LTE guard time as required, specifically including the following steps:

step I: selecting a cell random access preamble configuration with reference to Table 4, i.e., the maximum cell radii supported by five different Preambles in a TD-LTE system, and according to coverage radius of the target cell. For example, in the case of a large cell with a radius required to be greater than 100 kilometres, it is needed to at least configure the cell random access preamble as the format 3;

step II: calculating, according to the coverage radius of the target cell, the needed guard time (GT) of the random access preamble, wherein the guard time of the preamble sequence may need to be able to guard round trip time delay; and

step III: calculating the length of the uplink subframes that are occupied by the cell random access preamble (Preamble). If the preamble sequence (Preamble) format 3 is selected, as shown in FIG. 1, the system needs three consecutive uplink subframes for transmitting the cell random access preamble. Hence, in the case of a large cell with a radius required to be greater than 100 kilometres, it is needed to configure at least three consecutive uplink subframes for transmitting the cell random access preamble.

The radio frame structure modification step specifically includes modifying, in combination with the configuration of special subframe and the requirements of random access preamble, the structure of the radio frame so as to satisfy the requirements of round trip transmission of large-radius cell edge users, specifically including the following steps:

step a, adjusting the special subframe time slot to allow the guard period (GP) to satisfy the requirements of the large cell radius;

step b, adjusting the configuration of DwPTS and UpPTS according to the time slot of the guard period (GP); and

step c, adjusting, if the modified radio frame does not have sufficient uplink subframe, the corresponding downlink subframes to be uplink subframes to ensure there is sufficient uplink subframes in the radio frame to enable the terminal side to transmit the cell random access preamble.

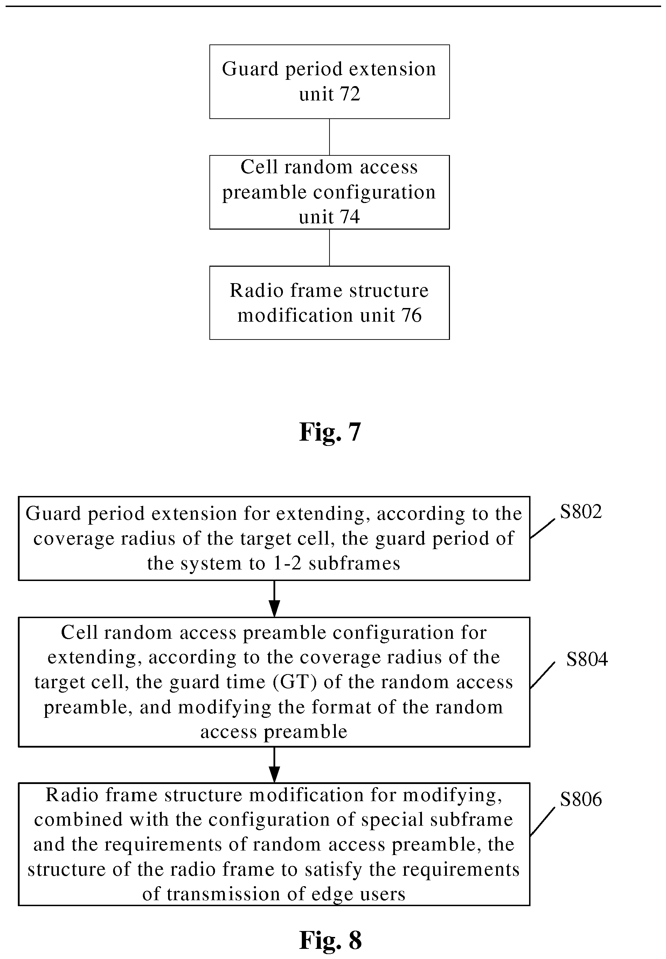

FIG. 7 shows a schematic structural diagram of a frame configuration device for an extra-large radius cell according to an embodiment of the present invention. As shown in FIG. 7, the system includes: a guard period extension unit 72, a cell random access preamble configuration unit 74 and a radio frame structure modification unit 76. The system is described below.

The guard period extension unit 72 is configured to calculate, according to the coverage radius of the target cell, the needed guard period (GP) and extend the TD-LTE guard period as required, e.g., to 1-2 subframes, so as to ensure that the uplink data of the large cell system will not interfere the downlink data;

the cell random access preamble (Preamble) configuration unit 74 is configured to extend, according to the coverage radius of the target cell, the guard time (GT) that is needed by the random access preamble, and modify the format of the preamble sequence, so as to ensure that the preamble random access preamble needed by the large cell system will not interfere the downlink data; and

the radio frame structure modification unit 76 is coupled to the above-mentioned guard period extension unit 72 and cell random access preamble configuration unit 74, and configured to modify, combined with the configuration of special subframe and the requirements of random access preamble, the structure of the radio frame so as to satisfy the requirements of round trip transmission of large-radius cell edge users and avoid the uplink and downlink data interference in the system.

By extending the guard period, configuring the random access preamble, and modifying the existing radio frame structure, compared with the related art, the embodiments of the present invention overcome the obstacle of 100 kilometres of the coverage radius of a single-station cell of the TD-LTE system, and extend the application of the TD-LTE in scenarios of shipping line coverage and extra-large cell coverage of sea surface and grasslands (200 kilometres or greater than 200 kilometres).

The frame configuration method for the TD-LTE extra-large radius cell (or extra-large cell coverage) provided in this embodiment is used to implement extra-large coverage radius of a cell of TD-LTE. For better understanding the technical solution of the embodiments of the present invention, it is described below taking an example of implementing a cell of TD-LTE system with a radius of 200 kilometres in conjunction with the accompanying drawings.

FIG. 8 shows a flowchart of implementation of a frame configuration method for an extra-large radius cell according to an embodiment of the present invention. As shown in FIG. 8, the process includes the following steps.

Step S802 is the guard period extension for calculating, according to the coverage radius of the target cell, the needed guard period (GP) and extending the TD-LTE guard period as required to 1-2 subframes, so as to ensure that the uplink data of the large cell system will not interfere the downlink data.

In the case that the coverage radius of the target cell is $r = 200km$, the light speed is $c=3\times10^8 m/s$, and the needed guard period represented as $T_{GP}$ specifically is:

$$T_{GP} = \frac{200km}{3\times10^8 m/s} \times 2 = 1.33ms ;$$

and

see Table 5, in 20 MHz bandwidth, and the system sampling frequency is 30.72 MHz, the guard period that a cell with a radius of 200 kilometres needs shall occupy:

$$1.33ms \times 30.72MHz = 40960T_s .$$

Table 5 TD-LTE bandwidth allocation and sampling frequency

| System Bandwidth | 1.4 MHz | 3 MHz | 5 MHz | 10 MHz | 15 MHz | 20 MHz |
|---|---|---|---|---|---|---|
| Sampling Frequency (MHz) | 1.92 | 3.84 | 7.68 | 15.36 | 23.04 | 30.72 |

The guard period that a cell with a radius of 200 kilometres needs shall occupy 40960 Ts, that is, the guard period (GP) in a special subframe of a TD-LTE radio frame needs to be at least 40960 Ts.

According to Table 6, a subframe in the 20 MHz bandwidth configuration has a length of 30720 Ts. In the case that the GP is at least 40960 Ts, the special subframe where the guard period (GP) is located shall be extended to two subframes.

Step S804 is the cell random access preamble (Preamble) configuration for extending, according to the coverage radius of the target cell, the needed guard time (GT) of the random access preamble, and modifying the format of the preamble sequence, so as to ensure that the random access preamble sequence that the large cell system need will not interfere the downlink data. For example, the step S804 includes the following processing.

Step A, referring to Table 4, i.e., the maximum cell radii supported by five different Preambles in a TD-LTE system, in the case that the coverage radius of the target cell is required to be 200 kilometres, greater than 100 kilometres, it is required to at least configure the random access preamble of the cell as format 3, as shown in Table7. This embodiment describes the solution design taking an example of configuring the preamble sequence as format 3.

Table 8 The maximum radius of a cell supported by the Preamble format 3 in a TD-LTE system

| Configuration of Random Access Preamble | $T_{CP}$ | $T_{SEQ}$ | $T_{GT}$ | Cell Radius |
|---|---|---|---|---|
| 3 | 21024 Ts | 2*24576 Ts | 21984 Ts | 100 km |

Step B, the needed guard time (GT) of the random access preamble is calculated according to the coverage radius of the target cell. The guard time of the preamble sequence needs to guard round trip time delay. Since the terminal does not know the distance between the base station and the terminal before transmitting the Preamble, the GT length should be large enough such that the random access preamble sequence, which the terminal at the cell edge transmits according to the timing location acquired from the initial searching of the cell, will not interfere the reception of the subsequent signals when this random access preamble sequence arrives at the base station.

In the case that the coverage radius of the target cell is $r = 200km$, the light speed is $c=3\times10^8 m/s$, and the needed guard time of the random access preamble is represented as $T_{GT}$, then the needed guard time in 20 MHz bandwidth specifically is:

$$T_{GT} = \frac{200km}{3\times10^8 m/s} \times 2 = 40960Ts$$

.

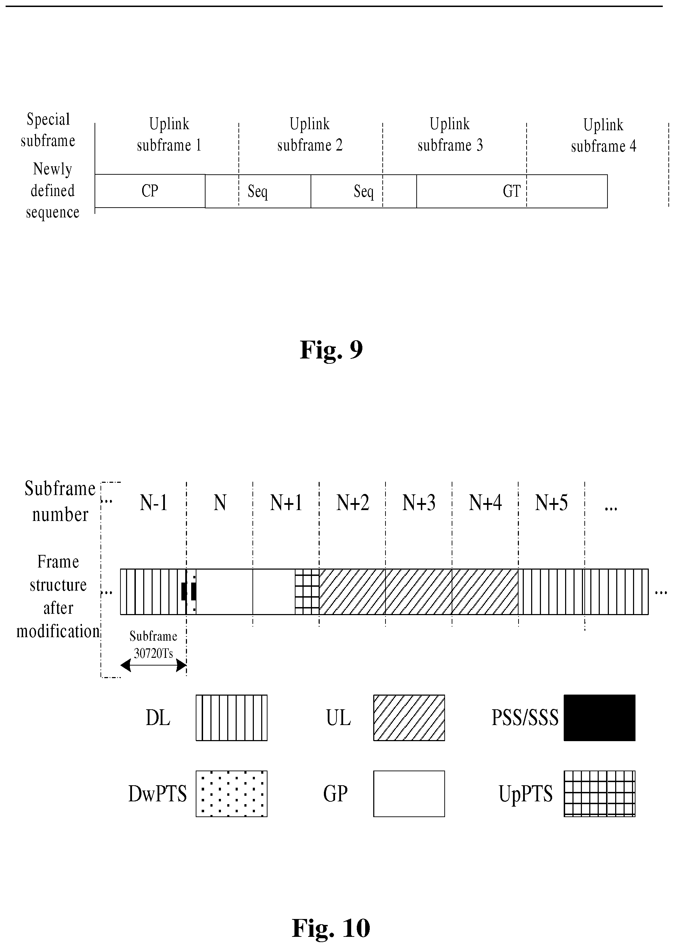

Step C, the length of the uplink subframes that are occupied by the cell random access preamble (Preamble) is calculated. If the selected random access preamble (Preamble) is format 3, referring to Table 9, after extending the guard time of the random access preamble from 21984 Ts to 40960 Ts, the random access preamble has a total length of 111136 Ts, i.e., 3 subframes plus 18976 Ts. The Preamble with its guard time (GT) extended needs the cooperation of the receiving algorithm of the base station side, to ensure the access performance. FIG. 9 shows a schematic diagram of a random access preamble with a radius of 200 km in a TD-LTE system according to an embodiment of the present invention. As shown in FIG. 9, for a large cell with a radius of 200 kilometres, it is required to configure uplink time slots of three consecutive uplink subframes plus 18976 Ts to transmit the cell random access preamble.

Step S806 is the radio frame structure modification for modifying, combined with the configuration of special subframe and the requirements of random access preamble, the structure of the radio frame to satisfy the requirements of round trip transmission of large-radius cell edge users and avoid the uplink and downlink data interference in the system.

According to the above-mentioned analysis and the configuration of this embodiment, for satisfying coverage radius of 200 kilometres of a cell of a TD-LTE system, in the case of 20 MHz bandwidth and normal cyclic prefix configuration, it is required to extend the guard period of the special subframe to 40960 Ts, and the random access preamble needs to at least occupy the uplink time slots of three uplink subframes plus 18976 Ts to transmit the random access preamble of the cell. Therefore, the existing TD-LTE radio frame is modified accordingly, for example, adopting the following processing.

Step A, the special subframe time slots are adjusted to allow the guard period (GP) to satisfy the requirements of the large radius of cell.

On the basis of the above-mentioned calculation, in the case of a cell with a radius of 200 kilometres, the guard period needs at least to be 40960 Ts. Hence, it is required to extend the special subframe where the GP is located to 2 subframes.

Step B, the configuration of DwPTS and UpPTS is adjusted according to the time slots of the guard period (GP).

The total length of two subframes is 2*30720 Ts, i.e., 61440 Ts. Where 40960 Ts is a guard period, then 61440 Ts-40960 Ts=20480 Ts is used as DwPTS and UpPTS. Where the duration of the DwPTS and UpPTS may be configured flexibly according to the conditions of the cell. With this, it satisfies the requirements of the guard period (GP) that a cell with a radius of 200 kilometres needs.

Step C, if the modified radio frame has insufficient uplink subframe, the corresponding downlink subframes are adjusted to be uplink subframes to ensure there is sufficient uplink subframes in the radio frame to enable the terminal side to transmit the cell random access preamble.

FIG. 10 shows a sequence chart of the frame structure of a cell with a radius of 200 km in a TD-LTE system according to an embodiment of the present invention. As shown in FIG. 10, after extending the special subframe to two subframes, examining whether there is sufficient uplink subframe following the special subframe to transmit the random access preamble. According to the above-mentioned analysis, the random access preamble that a cell with a radius of 200 kilometres needs shall be 111136 Ts, occupying the uplink time slots of three consecutive uplink subframes plus 18976 Ts on the time domain. In this embodiment, the three consecutive subframes following the new special subframe are adjusted to be three consecutive uplink subframes. The modified random access preamble is transmitted in the UpPTS of the special subframe and the three consecutive uplink subframes.

The frame structure of the cell as shown in FIG. 10 acquired after the above-mentioned modification satisfies the coverage radius of 200 kilometres.

Obviously, those skilled in the art shall understand that the above-mentioned components and steps of the disclosure can be realized by using general purpose calculating device, can be integrated in one calculating device or distributed on a network which consists of a plurality of calculating devices. Alternatively, the components and the steps of the disclosure can be realized by using the executable program code of the calculating device. Consequently, they can be stored in the storing device and executed by the calculating device, or they are made into integrated circuit component respectively, or a plurality of components or steps thereof are made into one integrated circuit component.

Thus, the present invention is not limited to any particular combination of hardware and software.

The above description is only example embodiments of the present invention and is not intended to limit the present invention, and the present invention can have a variety of changes and modifications for ordinary person skilled in the field. Any modification, equivalent replacement, or improvement made without departing from the principle of the present invention should fall within the protection scope as defined by the claims of the present invention.

**Claims**

1. A method for processing a random access preamble comprising the steps of determining (S202), according to a coverage radius of a cell, a guard time (GT) that is needed when a user equipment, UE, communicates with a base station, wherein the coverage radius of the cell is greater than 100 kilometres;
determining (S204), according to the GT, a random access preamble transmitted by the UE to the base station, **characterized in that** the random access preamble is transmitted on a special subframe and at least one regular subframe of a radio frame when the UE communicates with the base station; the method further comprising the steps of adjusting a special subframe time slot to allow a guard period, GP, to satisfy requirements of the coverage radius of the cell;
adjusting configuration of Downlink Pilot Time Slot, DwPTS, and Uplink Pilot Time Slot, UpPTS, according to a time slot of the GP; and
adjusting, if a modified radio frame does not have sufficient uplink subframes, corresponding downlink subframes to be uplink subframes to ensure there is sufficient uplink subframes in the radio frame to enable the UE to transmit the random access preamble.

2. The method according to claim 1, **characterized in that** before determining (S202), according to the GT, the random access preamble transmitted by the UE to the base station, the method further comprises:

   determining, according to the coverage radius of the cell, the guard period (GP) that is needed when the UE communicates with the base station.

3. The method according to claim 1 or 2, **characterized in that** determining (S202), according to the GT, the random access preamble transmitted by the UE to the base station comprises:

   extending the length of the GT part in the random access preamble of the radio frame, wherein the length of the extended GT part is equal to the length of the GT determined according to the coverage radius of the cell.

4. The method according to claim 1 or 2, **characterized in that** after determining (S202), according to the GT, the random access preamble transmitted by the UE to the base station, the method further comprises:

   judging, in communication resources used by the UE to communicate with the base station, whether there are sufficient time slot resources for transmitting the random access preamble by the UE to the base station; and if the judging result is negative, adjusting the allocation of uplink/downlink time slot resources of the communication resources.

5. The method according to claim 2, **characterized in that** the GP has a length in a range from a length of 2/3 of a subframe to a length of 2 subframes.

6. A device for processing a random access preamble comprising:

   a first determination component (32) configured to determine, according to a coverage radius of a cell, a guard time GT, that is needed when a user equipment, UE, communicates with a base station, wherein the coverage radius of the cell is greater than 100 kilometres; and
   a second determination component (34) configured to determine, according to the GT, a random access preamble transmitted by the UE to the base station, **characterized in that** the random access preamble is transmitted on a special subframe and at least one regular subframe of a radio frame when the UE communicates with the base station;
   wherein the device is further configured to:

   adjust a special subframe time slot to allow a guard period, GP, to satisfy requirements of the coverage radius of the cell;

adjust configuration of Downlink Pilot Time Slot, DwPTS, and Uplink Pilot Time Slot, UpPTS, according to a time slot of the GP; and

adjust, if a modified radio frame does not have sufficient uplink subframes, corresponding downlink subframes to be uplink subframes to ensure there is sufficient uplink subframes in the radio frame to enable the UE to transmit the random access preamble.

7. The device according to claim 6, **characterized by** further comprising:

a third determination component (42) configured to determine, according to the coverage radius of the cell, the GP that is needed when the UE communicates with the base station.

8. The device according to claim 6 or 7, **characterized in that** the second determination component (34) comprises:

an extension unit (52) configured to extend the length of the GT part in the random access preamble of the radio frame, wherein the length of the extended GT part is equal to the length of the GT determined according to the coverage radius of the cell.

9. The device according to claim 6 or 7, **characterized by** further comprising:

a judgment component (62) configured to judge, in communication resources used by the UE to communicate with the base station, whether there is a sufficient uplink time slot resource for transmitting the random access preamble by the UE to the base station; and

an adjustment component (64) configured to adjust, if the judging result of the judgment component (62) is negative, the allocation of uplink/downlink time slot resources of the communication resources.

10. The device according to claim 7, **characterized in that** the third determination component (42) is further configured to determine the length of the GP in a range from a length of 2/3 of a subframe to a length of 2 subframes.

**Patentansprüche**

1. Verfahren zur Verarbeitung einer Direktzugriffspräambel, das die folgenden Schritte umfasst:

Bestimmen (S202), gemäß einem Abdeckungsradius einer Funkzelle, einer Schutzzeit (GT, Guard Time), die erforderlich ist, wenn eine Teilnehmereinrichtung (UE, User Equipment) mit einer Basisstation kommuniziert, wobei der Abdeckungsradius der Funkzelle größer als 100 Kilometer ist;

Bestimmen (S204), gemäß der GT, einer Direktzugriffspräambel, die von der UE an die Basisstation übertragen wird, **dadurch gekennzeichnet, dass** die Direktzugriffspräambel auf einem speziellen Subrahmen und wenigstens einem regulären Subrahmen eines Funkrahmens übertragen wird, wenn die UE mit der Basisstation kommuniziert;

wobei das Verfahren weiterhin die folgenden Schritte umfasst:

Anpassen eines Zeitfensters für einen speziellen Subrahmen, um zu ermöglichen, dass eine Schutzperiode (GP, Guard Period) die Anforderungen des Abdeckungsradius der Funkzelle erfüllt;

Anpassen der Konfiguration eines Downlink-Pilotzeitfensters (Downlink Pilot Time Slot, DwPTS) und eines Uplink-Pilotzeitfensters (Uplink Pilot Time Slot, UpPTS) gemäß einem Zeitfenster der GP; und

Anpassen, falls ein modifizierter Funkrahmen keine ausreichenden Uplink-Subrahmen aufweist, von korrespondierenden Downlink-Subrahmen, um sicherzustellen, dass ausreichend Uplink-Subrahmen in dem Funkrahmen vorhanden sind, um der UE zu ermöglichen, die Direktzugriffspräambel zu übertragen.

2. Verfahren gemäß Anspruch 1, **dadurch gekennzeichnet, dass** vor dem Bestimmen (S204), gemäß der GT, der Direktzugriffspräambel, die von der UE an die Basisstation übertragen wird, das Verfahren weiterhin umfasst:

Bestimmen, gemäß dem Abdeckungsradius der Funkzelle, der Schutzperiode (GP, Guard Period), die erforderlich ist, wenn die UE mit der Basisstation kommuniziert.

3. Verfahren gemäß Anspruch 1 oder 2, **dadurch gekennzeichnet, dass** der Schritt des Bestimmens (S204), gemäß der GT, der Direktzugriffspräambel, die von der UE an die Basisstation übertragen wird, umfasst:

Erweitern der Länge des GT-Teils in der Direktzugriffspräambel des Funkrahmens, wobei die Länge des erweiterten GT-Teils gleich der Länge der GT, die gemäß dem Abdeckungsradius der Funkzelle bestimmt wird, ist.

4. Verfahren gemäß Anspruch 1 oder 2, **dadurch gekennzeichnet, dass** nach dem Bestimmen (S204), gemäß der GT, der Direktzugriffspräambel, die von der UE an die Basisstation übertragen wird, das Verfahren weiterhin umfasst:

Beurteilen, in von der UE zur Kommunikation mit der Basisstation verwendeten Kommunikationsressourcen, ob ausreichend Zeitfensterressourcen zum Übertragen der Direktzugriffspräambel durch die UE an die Basisstation vorhanden sind; und
wenn das Beurteilungsergebnis negativ ist, Anpassen der Zuweisung von Uplink-/Downlink-Zeitfensterressourcen der Kommunikationsressourcen.

5. Verfahren gemäß Anspruch 2, **dadurch gekennzeichnet, dass** die GP eine Länge in einem Bereich von einer Länge von 2/3 eines Subrahmens bis zu einer Länge von 2 Subrahmen aufweist.

6. Vorrichtung zur Verarbeitung einer Direktzugriffspräambel, wobei die Vorrichtung umfasst:

eine erste Bestimmungskomponente (32), die dazu konfiguriert ist, gemäß einem Abdeckungsradius einer Funkzelle eine Schutzzeit (GT, Guard Time), die erforderlich ist, wenn eine Teilnehmereinrichtung (UE, User Equipment) mit einer Basisstation kommuniziert, zu bestimmen, wobei der Abdeckungsradius der Funkzelle größer als 100 Kilometer ist; und
eine zweite Bestimmungskomponente (34), die dazu konfiguriert ist, gemäß der GT eine Direktzugriffspräambel, die von der UE an die Basisstation übertragen wird, zu bestimmen, **dadurch gekennzeichnet, dass**
die Direktzugriffspräambel auf einem speziellen Subrahmen und wenigstens einem regulären Subrahmen eines Funkrahmens übertragen wird, wenn die UE mit der Basisstation kommuniziert;
wobei die Vorrichtung weiterhin konfiguriert ist zum:

Anpassen eines Zeitfensters für einen speziellen Subrahmen, um zu ermöglichen, dass die Schutzperiode (GP, Guard Period) die Anforderungen des Abdeckungsradius der Funkzelle erfüllt;
Anpassen der Konfiguration eines Downlink-Pilotzeitfensters (Downlink Pilot Time Slot, DwPTS) und eines Uplink-Pilotzeitfensters (Uplink Pilot Time Slot, UpPTS) gemäß einem Zeitfenster der GP; und
Anpassen, falls ein modifizierter Funkrahmen keine ausreichenden Uplink-Subrahmen aufweist, von korrespondierenden Downlink-Subrahmen, um sicherzustellen, dass ausreichend Uplink-Subrahmen in dem Funkrahmen vorhanden sind, um der UE zu ermöglichen, die Direktzugriffspräambel zu übertragen.

7. Vorrichtung gemäß Anspruch 6, **dadurch gekennzeichnet, dass** die Vorrichtung weiterhin umfasst:

eine dritte Bestimmungskomponente (42), die dazu konfiguriert ist, gemäß dem Abdeckungsradius der Funkzelle, die Schutzperiode, die erforderlich ist, wenn die UE mit der Basisstation kommuniziert, zu bestimmen.

8. Vorrichtung gemäß Anspruch 6 oder 7, **dadurch gekennzeichnet, dass** die zweite Bestimmungskomponente (34) umfasst:

eine Erweiterungseinheit (52), die dazu konfiguriert ist, die Länge des GT-Teils in der Direktzugriffspräambel des Funkrahmens zu erweitern, wobei die Länge des erweiterten GT-Teils gleich der Länge der GT, die gemäß dem Abdeckungsradius der Funkzelle bestimmt wird, ist.

9. Vorrichtung gemäß Anspruch 6 oder 7, **dadurch gekennzeichnet, dass** die Vorrichtung weiterhin umfasst:

eine Beurteilungskomponente (62), die konfiguriert ist zum Beurteilen, in von der UE zur Kommunikation mit der Basisstation verwendeten Kommunikationsressourcen, ob ausreichend Zeitfensterressourcen zum Übertragen der Direktzugriffspräambel durch die UE an die Basisstation vorhanden sind; und
eine Anpassungskomponente (64) die konfiguriert ist zum Anpassen der Zuweisung von Uplink-/Downlink-Zeitfensterressourcen der Kommunikationsressourcen, wenn das Beurteilungsergebnis negativ ist.

10. Vorrichtung gemäß Anspruch 7, **dadurch gekennzeichnet, dass** die dritte Bestimmungskomponente (42) weiterhin dazu konfiguriert ist, die Länge der GP in einem Bereich von einer Länge von 2/3 eines Subrahmens bis zu einer Länge von 2 Subrahmen zu bestimmen.

**Revendications**

1. Procédé de traitement d'un préambule à accès aléatoire comprenant les étapes suivantes :

   la détermination (S202), selon un rayon de couverture d'une cellule, d'un temps de garde (GT) qui est nécessaire lorsqu'un équipement utilisateur, UE, communique avec une station de base, dans lequel le rayon de couverture de la cellule est supérieur à 100 kilomètres ; la détermination (S204), en fonction du GT, d'un préambule à accès aléatoire transmis par l'UE à la station de base, **caractérisé en ce que** le préambule à accès aléatoire est transmis sur une sous-trame spéciale et au moins une sous-trame régulière d'une trame radio lorsque l'UE communique avec la station de base ; le procédé comprenant en outre les étapes suivantes :

   l'ajustement d'un intervalle de temps de sous-trame spéciale pour permettre à une période de garde, GP, de satisfaire les exigences du rayon de couverture de la cellule ; l'ajustement de la configuration d'un intervalle de temps de pilote de liaison descendante, DwPTS, et d'un intervalle de temps de pilote de liaison montante, UpPTS, selon un intervalle de temps de la GP;et l'ajustement, si une trame radio modifiée ne comporte pas suffisamment de sous-trames de liaison montante, des sous-trames de liaison descendante correspondantes pour qu'elles soient des sous-trames de liaison montante afin de garantir qu'il existe suffisamment de sous-trames de liaison montante dans la trame radio pour permettre à l'UE de transmettre le préambule à accès aléatoire.

2. Procédé selon la revendication 1, **caractérisé en ce qu'**avant la détermination (S202), selon le GT, du préambule à accès aléatoire transmis par l'UE à la station de base, le procédé comprend en outre :

   la détermination, en fonction du rayon de couverture de la cellule, de la période de garde (GP) qui est nécessaire lorsque l'UE communique avec la station de base.

3. Procédé selon la revendication 1 ou 2, **caractérisé en ce que** la détermination (S202), en fonction du GT, du préambule à accès aléatoire transmis par l'UE à la station de base comprend :

   l'extension de la longueur de la partie GT dans le préambule à accès aléatoire de la trame radio, dans lequel la longueur de la partie GT étendue est égale à la longueur du GT déterminé en fonction du rayon de couverture de la cellule.

4. Procédé selon la revendication 1 ou 2, **caractérisé en ce qu'**après la détermination (S202), selon le GT, du préambule à accès aléatoire transmis par l'UE à la station de base, le procédé comprend en outre :

   l'estimation, dans les ressources de communication utilisées par l'UE pour communiquer avec la station de base, du fait qu'il existe ou pas suffisamment de ressources d'intervalle de temps pour la transmission du préambule à accès aléatoire par l'UE à la station de base ; et si le résultat de l'estimation est négatif, l'ajustement de l'affectation des ressources d'intervalle de temps de liaison montante/descendante des ressources de communication.

5. Procédé selon la revendication 2, **caractérisé en ce que** la GP a une longueur dans une plage d'une longueur de 2/3 d'une sous-trame à une longueur de 2 sous-trames.

6. Dispositif pour traiter un préambule à accès aléatoire comprenant :

   un premier élément de détermination (32) configuré pour déterminer, en fonction d'un rayon de couverture d'une cellule, un temps de garde GT, qui est nécessaire lorsqu'un équipement utilisateur, UE, communique avec une station de base, dans lequel le rayon de couverture de la cellule est supérieur à 100 kilomètres ; et un deuxième élément de détermination (34) configuré pour déterminer, en fonction du GT, un préambule à accès aléatoire transmis par l'UE à la station de base, **caractérisé en ce que**

le préambule à accès aléatoire est transmis sur une sous-trame spéciale et au moins une sous-trame régulière d'une trame radio lorsque l'UE communique avec la station de base ;

dans lequel le dispositif est configuré en outre pour :

ajuster un intervalle de temps de sous-trame spéciale pour permettre à une période de garde, GP, de satisfaire les exigences du rayon de couverture de la cellule ;

ajuster la configuration d'un intervalle de temps de pilote de liaison descendante, DwPTS, et d'un intervalle de temps de pilote de liaison montante, UpPTS, selon un intervalle de temps de la GP ; et

ajuster, si une trame radio modifiée ne comporte pas suffisamment de sous-trames de liaison montante, des sous-trames de liaison descendante correspondantes pour qu'elles soient des sous-trames de liaison montante afin de garantir qu'il existe suffisamment de sous-trames de liaison montante dans la trame radio pour permettre à l'UE de transmettre le préambule à accès aléatoire.

**7.** Dispositif selon la revendication 6, **caractérisé en ce qu'**il comprend en outre :

un troisième élément de détermination (42) configuré pour déterminer, en fonction du rayon de couverture de la cellule, la GP qui est nécessaire lorsque l'UE communique avec la station de base.

**8.** Dispositif selon la revendication 6 ou 7, **caractérisé en ce que** le second élément de détermination (34) comprend :

une unité d'extension (52) configurée pour étendre la longueur de la partie GT dans le préambule à accès aléatoire de la trame radio, dans lequel la longueur de la partie GT étendue est égale à la longueur du GT déterminé en fonction du rayon de couverture de la cellule.

**9.** Dispositif selon la revendication 6 ou 7, **caractérisé en ce qu'**il comprend en outre :

un élément d'estimation (62) configuré pour estimer, dans les ressources de communication utilisées par l'UE pour communiquer avec la station de base, s'il existe suffisamment de ressources d'intervalle de temps de liaison montante pour transmettre le préambule à accès aléatoire à l'aide de l'UE à la station de base ; et

un élément d'ajustement (64) configuré pour ajuster, si le résultat de l'estimation de l'élément d'estimation (62) est négatif, l'affectation de ressources d'intervalle de temps de liaison montante/descendante des ressources de communication.

**10.** Dispositif selon la revendication 7, **caractérisé en ce que** le troisième élément de détermination (42) est en outre configuré pour déterminer la longueur de la GP dans une plage d'une longueur de 2/3 d'une sous-trame à une longueur de 2 sous-trames.

**Fig. 1**

**Fig. 2**

First determination component 32

Second determination component 34

**Fig. 3**

First determination component 32

Third determination component 42

Second determination component 34

**Fig. 4**

**Fig. 5**

**Fig. 6**

Guard period extension
unit 72

Cell random access
preamble configuration
unit 74

Radio frame structure
modification unit 76

**Fig. 7**

Guard period extension for extending, according to the coverage radius of the target cell, the guard period of the system to 1-2 subframes ⟋ S802

Cell random access preamble configuration for extending, according to the coverage radius of the target cell, the guard time (GT) of the random access preamble, and modifying the format of the random access preamble ⟋ S804

Radio frame structure modification for modifying, combined with the configuration of special subframe and the requirements of random access preamble, the structure of the radio frame to satisfy the requirements of transmission of edge users ⟋ S806

**Fig. 8**

| Special subframe | Uplink subframe 1 | Uplink subframe 2 | Uplink subframe 3 | Uplink subframe 4 |
|---|---|---|---|---|

| Newly defined sequence | CP | Seq | Seq | GT | |
|---|---|---|---|---|---|

**Fig. 9**

Subframe number: ... N-1 | N | N+1 | N+2 | N+3 | N+4 | N+5 | ...

Frame structure after modification

Subframe 30720Ts

DL

UL

PSS/SSS

DwPTS

GP

UpPTS

**Fig. 10**

**EP 2 941 081 B1**

**REFERENCES CITED IN THE DESCRIPTION**

**Patent documents cited in the description**

- US 2011292816 A1
- CN 101940053 A